# EUROPEAN PATENT APPLICATION

(11) **EP 4 838 959 A1**
(43) Date of publication of application: **11.11.2026**
(21) Application number: 25175225.9
(22) Date of filing: 09.05.2025
(51) Int. Cl.: H04W 48/02, H04W 36/00

(54) **METHOD FOR CONTROLLING USAGE OF RADIO CELLS**

(71) Applicant: NTT DOCOMO, INC., Tokyo 100-6150 (JP)
(72) Inventor: BHATTACHARJEE, Sushmit, 80687 Munich (DE); MINOKUCHI, Atsushi, Tokyo, 100-6150 (JP); SAMA, Malla Reddy, 80687 Munich (DE)
(74) Representative: Viering, Jentschura & Partner mbB Patent- und Rechtsanwälte

(57) **Abstract**

According to various embodiments, a method for controlling usage of radio cells is described, comprising receiving, by a component of a 5G mobile radio communication system, a specification of a group of radio cells forbidden for a mobile terminal in form of three octets, checking, by the component of the 5G mobile radio communication system, whether the octet has a predefined value at a predefined position of the three octets, in response to the octet at the predefined position of the three octets having the predefined value, determining, by the component of the 5G mobile radio communication system, a group of 4G radio cells of a 4G mobile radio communication network from the other two octets of the three octets and prevent usage of the determined group of 4G radio cells by the mobile terminal and, in response to the octet at the predefined position of the three octets not having the predefined value, determining, by the component of the 5G mobile radio communication system, a group of 5G radio cells from the three octets and prevent usage of the determined group of 5G radio cells by the mobile terminal.

## Description

The present disclosure relates to methods for controlling usage of radio cells.

In mobile radio communication systems, it may be desirable to restrict radio cells that can be used by a mobile terminal. This may for example be the case when radio cells are reserved for users of a certain company or are private cells, etc. Both 4G and 5G communication networks typically provide such a functionality by allowing the definition and signalling of Tracking Area Codes (TACs) which allow defining forbidden tracking areas and thus, groups of radio cells. However, 4G networks typically have TACs consisting of two octets while 5G networks typically have TACs consisting of three octets, leading to challenges in interworking scenarios like in scenario where a 4G network is used as a fallback for a 5G network. Accordingly approaches which allow reliable control of the usage of radio cells in such interworking scenarios are desirable.

According to various embodiments, a method for controlling usage of radio cells is provided, comprising:
- Receiving, by a component of a 5G mobile radio communication system, a specification of a group of radio cells forbidden for a mobile terminal in form of three octets,
- Checking, by the component of the 5G mobile radio communication system, whether the octet has a predefined value at a predefined position of the three octets;
- In response to the octet at the predefined position of the three octets having the predefined value, determining, by the component of the 5G mobile radio communication system, a group of 4G radio cells of a 4G mobile radio communication network from the other two octets of the three octets and prevent usage of the determined group of 4G radio cells by the mobile terminal and
- In response to the octet at the predefined position of the three octets not having the predefined value, determining, by the component of the 5G mobile radio communication system, a group of 5G radio cells from the three octets and prevent usage of the determined group of 5G radio cells by the mobile terminal.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a mobile radio communication system.
Figure 2 illustrates a scenario where NR (New Radio) cells and LTE (Long Term Evolution) cells are neighbouring each other and a Forbidden Area and Non-Forbidden Areas are neighbouring each other.
Figure 3 shows a flow diagram illustrating a method for controlling usage of radio cells.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for controlling usage of radio cells, comprising receiving, by a component of a 5G mobile radio communication system, a specification of a group of radio cells forbidden for a mobile terminal in form of three octets, checking, by the component of the 5G mobile radio communication system, whether the octet has a predefined value at a predefined position of the three octets, in response to the octet at the predefined position of the three octets having the predefined value, determining, by the component of the 5G mobile radio communication system, a group of 4G radio cells of a 4G mobile radio communication network from the other two octets of the three octets and prevent usage of the determined group of 4G radio cells by the mobile terminal and in response to the octet at the predefined position of the three octets not having the predefined value, determining, by the component of the 5G mobile radio communication system, a group of 5G radio cells from the three octets and prevent usage of the determined group of 5G radio cells by the mobile terminal.
Example 2 is the method of example 1, wherein determining the group of 4G radio cells from the other two octets of the three octets comprises interpreting the two octets as 4G Tracking Area Code.
Example 3 is the method of example 1 or 2, wherein determining the group of 5G radio cells from the three octets comprises interpreting the three octets as 5G Tracking Area Code.
Example 4 is the method of any one of examples 1 to 3, wherein the component of the 5G mobile radio communication system is an Access and Mobility Management Function, a base station or the mobile terminal.
Example 5 is the method of any one of examples 1 to 4, wherein the octet at the predefined position is the first octet of the three octets.
Example 6 is the method of any one of examples 1 to 5, comprising generating, by another component of the 5G mobile radio communication system, the three octets by padding a 4G Tracking Area Code with an octet having the predefined value at the predefined position.
Example 7 is the method of any one of examples 1 to 6, comprising transmitting the three octets from the other component of the 5G mobile radio communication system to the component of the 5G mobile radio communication system as 5G Tracking Area Code.
Example 8 is the method of any one of examples 1 to 7, wherein the group of radio cells are radio cells of a tracking area, the group of 4G radio cells are radio cells of a 4G tracking area and the group of 5G radio cells are radio cells of a 5G tracking area.
Example 9 is the method of any one of examples 1 to 8, wherein the mobile terminal is a subscriber terminal of the 5G mobile radio communication system and is configured for fallback to the 4G mobile radio communication network.
Example 10 is the method of any one of examples 1 to 9, wherein preventing usage of the determined group of 4G radio cells by the mobile terminal comprises excluding the determined group of 4G radio cells from a set of cells to which the mobile terminal may fall back from the 5G mobile radio communication system.
Example 11 is the method of any one of examples 1 to 10, wherein preventing usage of the determined group of 5G radio cells by the mobile terminal comprises excluding the determined group of 5G radio cells from a set of target cells for a handover by the mobile terminal.
Example 12 is a mobile radio communication system, configured to perform a method of any one of examples 1 to 11.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

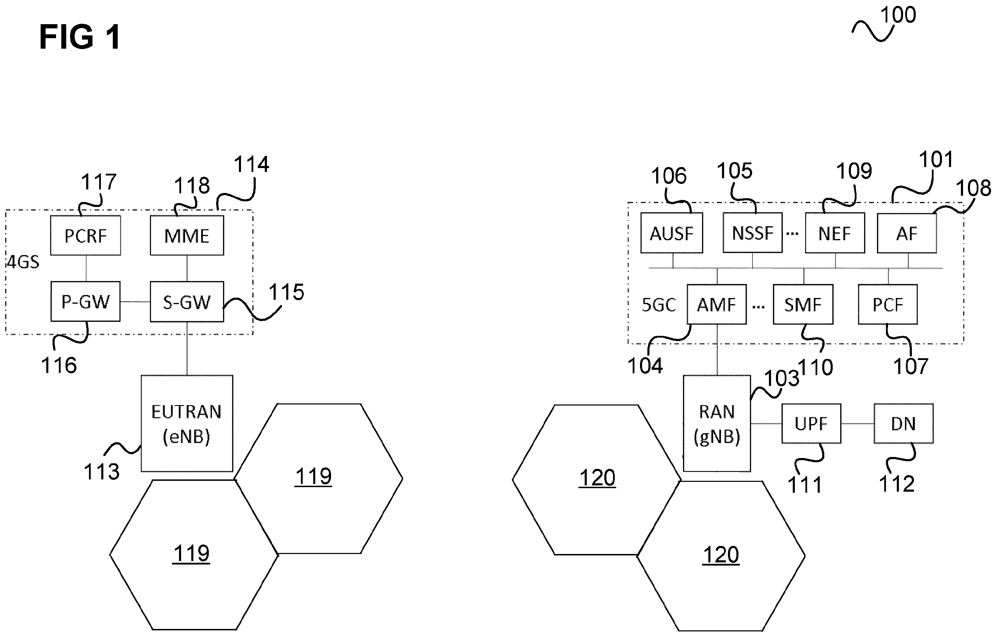

Figure 1 shows a mobile radio communication system 100 including a 4G part (i.e. a 4G mobile radio communication system) and a 5G part (i.e. a 5G mobile radio communication system).

The terms 4G and 5G (and the other terms used in the following in this context like EPC, E-UTRAN, LTE, NR etc.) may be understood according to 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

In the 5G part, the mobile radio communication system 100 includes a 5G Radio Access Network (RAN) 103, which may include a plurality of radio access network nodes, i.e. 5G base stations (gNBs) configured to provide radio access in accordance with a 5G (Fifth Generation) radio access technology (5G New Radio). Each 5G radio access network node may provide a radio communication with the mobile radio terminal device 102 over an air interface. It should be noted that the 5G radio access network 103 may include any number of radio access network nodes.

Further, in the 5G part, the mobile radio communication system 100 includes a 5G core network (5GC) 101 including an Access and Mobility Management Function (AMF) 104 connected to the 5G RAN 103 and a Network Slice Selection Function (NSSF) 105. Typically, there is also a Unified Data Management (UDM, not shown in figure 1) which may further consist of the actual UE's subscription database, which is known as, for example, the UDR (Unified Data Repository). The 5G core network further includes an AUSF (Authentication Server Function) 106, a PCF (Policy Control Function) 107, an AF (application function) 108, a Network Exposure Function (NEF) 109 and a Session Management Function (SMF) 110.

Further, the 5G RAN 103 is connected to a data network (DN) 112 via a User Plane Function (UPF) 111. The SMF 110 is for handling PDU (Protocol Data Unit) sessions, i.e. for creating, updating and removing PDU sessions and managing session context with the User Plane Function (UPF) 111.

In the 4G part, the communication system 100 includes a 4G Radio Access Network 113, i.e. an E-UTRAN, which may include a plurality of radio access network nodes, i.e. 4G base stations (eNBs) configured to provide radio access in accordance with a 4G (Fourth Generation) radio access technology, i.e. LTE (Long Term Evolution). Again, it should be noted that each 4G radio access network node may provide a radio communication with the mobile radio terminal device 102 over an air interface and that the 4G radio access network 103 may include any number of 4G radio access network nodes.

Further, in the 4G part, the mobile radio communication system 100 includes a 4G core network (4GS) 114 which includes a Serving Gateway (S-GW) 115, a PDN (Packet Data Network) Gateway (P-GW) 116, a Policy und Charging Rules Function (PCRF) 117 and a Mobility Management Entity (MME) 118.

The 5G RAN 103 and the 5G core network 101 and/or the 4G RAN 113 and the 4G core network 114 form the network side of the mobile radio communication system, or, in other words, form the 5G and/or 4G mobile radio communication network(s). The mobile radio communication network(s) and the mobile terminals accessing the mobile radio communication network(s), in particular the UE 102, form, together, the mobile radio communication system.

The 5G RAN 103 comprises 5G base stations (gNBs) operating NR (new radio) cells 119 and the 4G RAN 113 comprises 4G (i.e. LTE) base stations (eNBs) operating LTE cells 120.

The UE 102 may use a NR cell 119 or an LTE cell 120 as its serving radio cell depending on where it is located or choose among them in case it is located in both an NR cell 119 and an LTE cell 120.

Groups of cells 119, 120 form a tracking area, identified by a tracking area code (TAC). So, the Tracking Area Code (TAC) is a numerical identifier used in cellular networks, including 5G, to uniquely identify a tracking area within the respective cellular network. A tracking area is a geographical region served by a group of radio cells, and the TAC helps determine which tracking area a UE 102 belongs to.

The TAC can also be used to specify forbidden cells, i.e. cells that a UE 102 may not use as serving cell (i.e. may not register in and thus may not use for communication). This means that a TAC may be a Forbidden TAC within Forbidden Area Information for a UE 102, meaning that the group of radio cells it identifies are forbidden cells for the UE 102. For example, the access of the UE 102 to restricted areas/zones like for example, an MPN (Mobile Private Network), military zones, sensitive areas, or enterprise specific areas is forbidden.

In 5G, Forbidden TACs to which the UE is prohibited to access defines TACs for NR as three octets, i.e. a Forbidden TAC in 5G (i.e. a group of 5G cells 119) is specified in form of three octets (i.e. three times eight bit). In 4G, however, TACs consisting of two octets are used to define Forbidden TACs in E-UTRAN. This causes an interworking issue, since the NGAP (Next Generation Application Protocol) does not support configuring two octets as a forbidden TAC. Nevertheless, it may be desirable to include LTE cells (i.e. parts of an E-UTRAN serving area) as a forbidden area in restriction information (e.g. provided by AMF 104) for the UE to gNB in case of NR to LTE fallback. For example, it may be desirable to restrict mobility from a NR cell to specific EPS (Evolved Packet System) TACs, i.e. groups of LTE cells identified by two-octet LTE TACs, e.g. based on user subscription information. Examples where this may be of interest include in particular HAP (high-altitude platform) and NTN (non-terrestrial network) deployments since because of the moving coverage areas (e.g. due to satellite movement), LTE fallback may occur relatively often and it may not be desirable that a UE 102 falling back from NR to LTE can use any LTE cell.

UE behaviour in 5GS regarding mobility restriction is specified in 3GPP TS 24.501, where the specification of a Forbidden Area can include three-octet NR TACs. However, this is not limiting from a UE perspective: the UE can for example simultaneously register with an EPS and can directly receive information related to mobility restriction to EPS TAC from the EPC (in the form of a two-octet TAC). However, based on information exchanged in "Mobility Restriction LIST IE" in NGAP, according to the current 3GPP standard, the gNB cannot receive mobility restriction for EPS TAC from EPS. This may also lead to misalignment in UE and AMF with regard to mobility restriction.

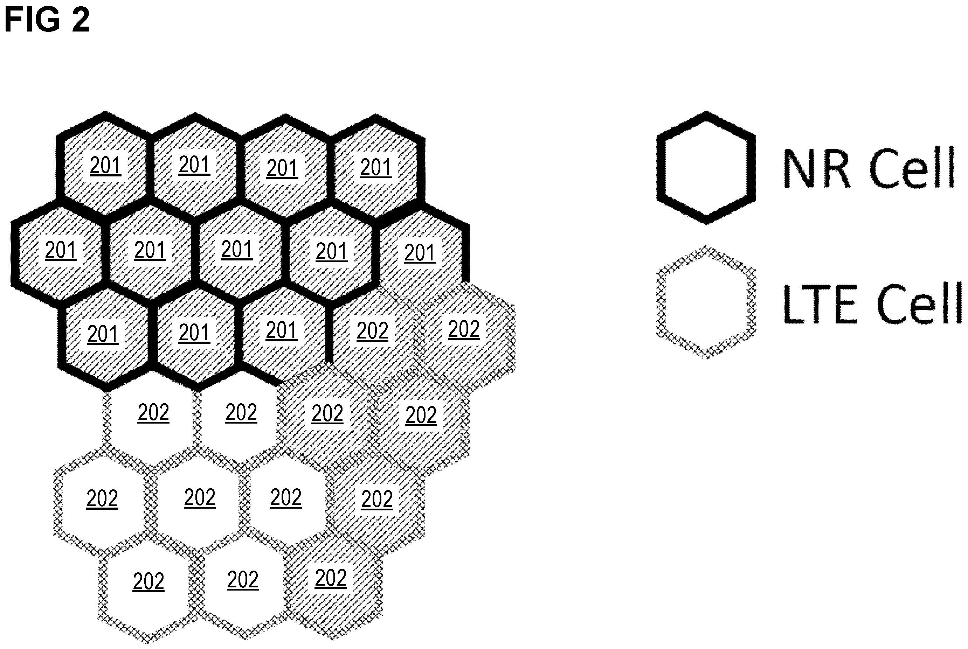

Figure 2 illustrates a scenario where NR cells (i.e. 5G cells) 201 (of a deployed 5G RAN) and LTE cells (i.e. 4G cells) 202 (of a deployed LTE RAN) are neighbouring each other and a Forbidden Area (i.e. forbidden cells, shown without hatching) and Non-Forbidden Areas (i.e. non-forbidden cells, shown with hatching) are neighbouring each other.

It is desirable that a 5G core network (5GC, e.g. AMF 104) is enabled to determine and/or specify forbidden LTE cells since otherwise (i.e. without the 5GC being able configure mobility restriction to LTE cells) a handover from the non-forbidden area to the forbidden area may occur (when a UE leaves the 5G coverage and a fallback occurs). If it were only NR deployment or only LTE deployment, such handover could be avoided by the mobility restriction function in 5GC and EPC respectively (using three-octet TACs and two-octet TACs, respectively.

To address this, according to various embodiments, a padding (left or right) is used to allow a three-octet Forbidden TAC in 5GC to also convey a Forbidden EPS TAC of two octets. For example, a padding at the beginning (or end) of a 5GC three-octet string is introduced (with a length of one octet). Logic at an AMF 104, a gNB, and/or a UE 102 detects the first (or last) octet of a received TAC and determines from that whether the TAC is for EPS or 5GC, i.e. specifies a forbidden 5G or LTE tracking area and avoids, if applicable, access to cells of forbidden tracking areas (and possibly determine an alternative serving cell, if any).

For example, a two-octet EPC Forbidden TAC
TAC = [TAC_High][TAC_low]
is padded to a three-octet 5GC Forbidden TAC
TAC = [0x00][TAC_High][TAC_low].

Here, the octet (padding) [0x00] serves as indicator that the TAC is for EPS. It is a predefined (and reserved) value.

The padding is performed by a component of the mobile radio communication system which provides information about Forbidden 4G TACs. This component is for example a policy source, in particular the forbidden TACs which is for example a storage component for subscription data (of subscriber terminals). For example, the policy source for forbidden TACs is the UDM and, for example, the AMF retrieves policies (including forbitten TACs) from the UDM and applies them. In such a case, the UDM (or another source (e.g. policy storage) of the forbidden TACs) performs the padding.

The 5G network side (e.g. AMF 104 and/or gNB)
- If 4G Forbidden TAC
   ∘ recognizes the 1st octet (0x00) as indicative to EPS Forbidden Area TAC.
   ∘ extracts the last two octets [TAC_High][TAC_low] as the EPS Forbidden TAC.
- if 5G Forbidden TAC EPS
   ∘ recognises the first octet as not an EPS indicative octet (since it has a value other than 0x00).
   ∘ reads the three octets as they are to derive the SGC Forbidden TAC.

The mobile terminal side (i.e. the UE 102) may operate in the same manner, if needed. It may for example not be needed if the UE 102 has already registered with the EPS and is informed about forbidden 4G TACs by the EPS

It should be noted that the padding at the beginning (left padding) is only an example and the padding can also be done at the end (right padding) or even in the middle (i.e. an octet may be inserted between the first and the second octet of the two-octet TAC). However, padding at the end (or in the middle) might be risky since the full three-octets could be interpreted as a different value. It should be noted that the padding value [0x00] is also only an example and other values may be defined to indicate 4G Forbidden TACs. It is also possible that more than one value is defined to indicated 4G Forbidden TACs, i.e. either of multiple values at the predefined position of the TAC may indicate that the TAC is a 4G Forbidden TAC.

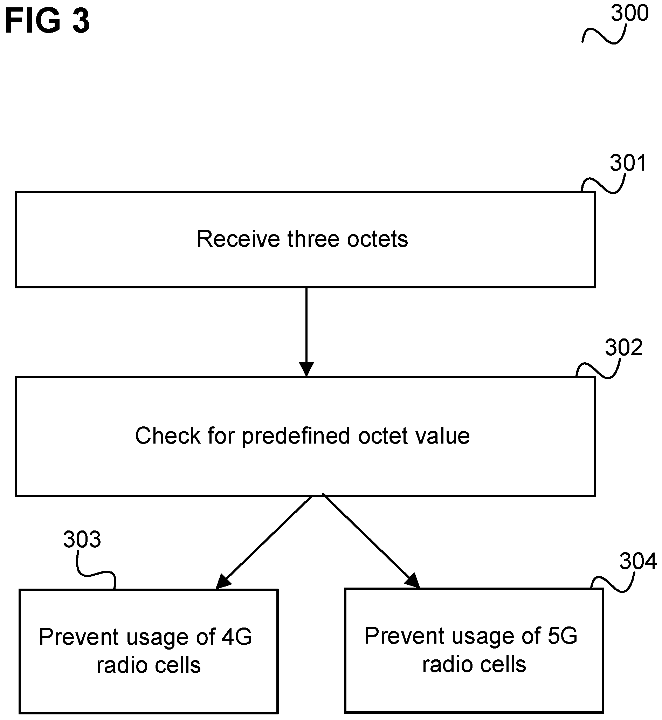

In summary, according to various embodiments, a method is provided as illustrated in figure 3.

Figure 3 shows a flow diagram 300 illustrating a method for controlling usage (by a mobile terminal) of radio cells.

In 301, a component of a 5G mobile radio communication system receives a specification of a group of radio cells forbidden for a mobile terminal in form of three octets.

In 302, the component of the 5G mobile radio communication system checks whether the octet has a predefined value at a predefined position of the three octets.

In 303, in response to the octet at the predefined position of the three octets having the predefined value, the component of the 5G mobile radio communication system determines a group of 4G radio cells of a 4G mobile radio communication network from the other two octets of the three octets (other than the one at the predefined position) and prevents (e.g. avoids) usage of the determined group of 4G radio cells by the mobile terminal.

In 304, in response to the octet at the predefined position of the three octets not having the predefined value (i.e., "otherwise" or "else"), the component of the 5G mobile radio communication system determines a group of 5G radio cells from the three octets and prevent (e.g. avoids) usage of the determined group of 5G radio cells by the mobile terminal. This may be done under the condition that (i.e. and in response to that), if multiple such predefined values have been defined, the octet at the predefined position does not have one of the other predefined values either. The predefined value may be considered as the last of multiple predefined values for which it is checked whether the octet at the predefined position has it so the condition may be assumed to be fulfilled (because the first reaction according to 303 would have already been entered for one of the other predefined values otherwise).

According to various embodiments, in other words, a component like an AMF, gNB, and/or UE checks whether a Forbidden TAC is for EPS or SGC and has the capability to interpret received TAC differently for EPS and 5GC.

The approach of figure 3 enables an inclusion of E-UTRAN tracking areas as a forbidden area in restriction information for the UE (e.g. provided or checked by an AMF) in case of NR to LTE Fallback. So, the mobile terminal (i.e. UE) can for example be prevented from accessing a Forbidden area when falling back from NR to LTE.

Thus, the approach of figure 3 allows restricting a UE from accessing restricted forbidden areas such as military zones etc. specifically in scenarios of NR to LTE fallback, like for example in HAPs/NTN deployments. Further, it allows backward compatibility (from 4G to 5G).

The method of figure 3 is carried out by one or more components of a mobile radio communication system, i.e. one or more components of a mobile radio communication system may be configured to perform 301 to 303. The components of the mobile radio communication system may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for controlling usage of radio cells, comprising:
Receiving, by a component of a 5G mobile radio communication system, a specification of a group of radio cells forbidden for a mobile terminal in form of three octets;
Checking, by the component of the 5G mobile radio communication system, whether the octet has a predefined value at a predefined position of the three octets;
In response to the octet at the predefined position of the three octets having the predefined value, determining, by the component of the 5G mobile radio communication system, a group of 4G radio cells of a 4G mobile radio communication network from the other two octets of the three octets and prevent usage of the determined group of 4G radio cells by the mobile terminal;
In response to the octet at the predefined position of the three octets not having the predefined value, determining, by the component of the 5G mobile radio communication system, a group of 5G radio cells from the three octets and prevent usage of the determined group of 5G radio cells by the mobile terminal.

2. The method of claim 1, wherein determining the group of 4G radio cells from the other two octets of the three octets comprises interpreting the two octets as 4G Tracking Area Code.

3. The method of claim 1 or 2, wherein determining the group of 5G radio cells from the three octets comprises interpreting the three octets as 5G Tracking Area Code.

4. The method of any one of claims 1 to 3, wherein the component of the 5G mobile radio communication system is an Access and Mobility Management Function, a base station or the mobile terminal.

5. The method of any one of claims 1 to 4, wherein the octet at the predefined position is the first octet of the three octets.

6. The method of any one of claims 1 to 5, comprising generating, by another component of the 5G mobile radio communication system, the three octets by padding a 4G Tracking Area Code with an octet having the predefined value at the predefined position.

7. The method of any one of claims 1 to 6, comprising transmitting the three octets from the other component of the 5G mobile radio communication system to the component of the 5G mobile radio communication system as 5G Tracking Area Code.

8. The method of any one of claims 1 to 7, wherein the group of radio cells are radio cells of a tracking area, the group of 4G radio cells are radio cells of a 4G tracking area and the group of 5G radio cells are radio cells of a 5G tracking area.

9. The method of any one of claims 1 to 8, wherein the mobile terminal is a subscriber terminal of the 5G mobile radio communication system and is configured for fallback to the 4G mobile radio communication network.

10. The method of any one of claims 1 to 9, wherein preventing usage of the determined group of 4G radio cells by the mobile terminal comprises excluding the determined group of 4G radio cells from a set of cells to which the mobile terminal may fall back from the 5G mobile radio communication system.

11. The method of any one of claims 1 to 10, wherein preventing usage of the determined group of 5G radio cells by the mobile terminal comprises excluding the determined group of 5G radio cells from a set of target cells for a handover by the mobile terminal.

12. A mobile radio communication system, configured to perform a method of any one of claims 1 to 11.

## Amended claims

### Amended claims in accordance with Rule 137(2) EPC.

1. A method for controlling usage of radio cells, comprising:
Receiving (301), by a component of a 5G mobile radio communication system, a specification of a group of radio cells forbidden for a mobile terminal in form of three octets;
Checking (302), by the component of the 5G mobile radio communication system, whether the octet of the three octets at a predefined position of the three octets has a predefined value;
In response to the octet at the predefined position of the three octets having the predefined value, determining, by the component of the 5G mobile radio communication system, a group of 4G radio cells of a 4G mobile radio communication network from the other two octets of the three octets and prevent usage of the determined group of 4G radio cells by the mobile terminal;
In response to the octet at the predefined position of the three octets not having the predefined value, determining, by the component of the 5G mobile radio communication system, a group of 5G radio cells (120, 201) from the three octets and prevent usage (304) of the determined group of 5G radio cells (120, 201) by the mobile terminal.

2. The method of claim 1, wherein determining the group of 4G radio cells (119, 202) from the other two octets of the three octets comprises interpreting the two octets as 4G Tracking Area Code.

3. The method of claim 1 or 2, wherein determining the group of 5G radio cells (120, 201) from the three octets comprises interpreting the three octets as 5G Tracking Area Code.

4. The method of any one of claims 1 to 3, wherein the component of the 5G mobile radio communication system is an Access and Mobility Management Function (104), a base station (103) or the mobile terminal.

5. The method of any one of claims 1 to 4, wherein the octet at the predefined position is the first octet of the three octets.

6. The method of any one of claims 1 to 5, comprising generating, by another component of the 5G mobile radio communication system, the three octets by padding a 4G Tracking Area Code with an octet having the predefined value at the predefined position.

7. The method of claim 6, comprising transmitting the three octets from the other component of the 5G mobile radio communication system to the component of the 5G mobile radio communication system as 5G Tracking Area Code.

8. The method of any one of claims 1 to 7, wherein the group of radio cells are radio cells of a tracking area, the group of 4G radio cells (119, 202) are radio cells of a 4G tracking area and the group of 5G radio cells (120, 201) are radio cells of a 5G tracking area.

9. The method of any one of claims 1 to 8, wherein the mobile terminal is a subscriber terminal of the 5G mobile radio communication system and is configured for fallback to the 4G mobile radio communication network.

10. The method of any one of claims 1 to 9, wherein preventing usage of the determined group of 4G radio cells (119, 202) by the mobile terminal comprises excluding the determined group of 4G radio cells (119, 202) from a set of cells to which the mobile terminal may fall back from the 5G mobile radio communication system.

11. The method of any one of claims 1 to 10, wherein preventing usage of the determined group of 5G radio cells (120, 201) by the mobile terminal comprises excluding the determined group of 5G radio cells (120, 201) from a set of target cells for a handover by the mobile terminal.

12. A 5G mobile radio communication system, configured to perform a method of any one of claims 1 to 11.
